Europäisches Patentamt

European Patent Office

Office européen des brevets

(19)

(11) Veröffentlichungsnummer: **0 329 662**
**B1**

(12) **EUROPÄISCHE PATENTSCHRIFT**

(45) Veröffentlichungstag der Patentschrift: **27.12.90**

(21) Anmeldenummer: **87906553.0**

(22) Anmeldetag: **09.10.87**

(86) Internationale Anmeldenummer:
**PCT/AT87/00057**

(87) Internationale Veröffentlichungsnummer:
**WO 88/02684 21.04.88 Gazette 88/09**

(51) Int. Cl.⁵: **B 29 B 17/00,** B 29 C 47/10,
B 29 B 13/10

(54) **VORRICHTUNG ZUM AUFBEREITEN VON KUNSTSTOFFGUT.**

(30) Priorität: **10.10.86 AT 2701/86**

(43) Veröffentlichungstag der Anmeldung:
**30.08.89 Patentblatt 89/35**

(45) Bekanntmachung des Hinweises auf die
Patenterteilung:
**27.12.90 Patentblatt 90/52**

(84) Benannte Vertragsstaaten:
**BE CH DE FR GB IT LI LU NL SE**

(56) Entgegenhaltungen:
**EP-A- 45 734**
**EP-A- 123 771**
**FR-A- 2 418 707**

(73) Patentinhaber: **EREMA ENGINEERING-
RECYCLING-MASCHINEN-ANLAGEN G.M.B.H.
Unterfeldstrasse 3
Freindorf, A-4052 Ansfelden (AT)**

(72) Erfinder: **BACHER, Helmut
Mittelpromenade 6
A-4040 Puchenau (AT)**
Erfinder: **SCHULZ, Helmuth
Enzing 19
A-4090 St.Florian (AT)**
Erfinder: **WENDELIN, Georg
Am Hartmayrgut 5
A-4040 Linz (AT)**

(74) Vertreter: **Brauneiss, Leo, Dipl.-Ing
Patentanwälte Dipl.-Ing. Leo Brauneiss Dipl.-Ing.
Dr. Helmut Wildhack Landstrasser Hauptstrasse
50 Postfach 281
A-1031 Wien (AT)**

## Beschreibung

Die Erfindung bezieht sich auf eine Vorrichtung zum Aufbereiten von Kunststoffgut, insbesondere thermoplastischem Kunststoffgut, mit einem Aufnahmebehälter, in dessen Bodenbereich ein um eine etwa vertikale Drehachse drehbares Zerkleinerungs- und Mischwerkzeug angeordnet ist, und mit einem das Gut aus dem Aufnahmebehälter herausfördernden Schnekkenextruder, dessen an einer Stirnseite der Schnecke angeordnete Eintrittsöffnung für das Gut von einer Öffnung in der Seitenwand des Aufnahmebehälters gebildet ist, die im wesentlichen auf der Höhe des Zerkleinerungs- und Mischwerkzeuges angeordnet ist, wobei keine oder keine wesentlichen Teile des Schneckenextruders von der Innenwand des Aufnahmebehälters abstehen.

Solche Vorrichtungen sind bekannt (EP—A—123 771). Das dem Aufnahmebehälter zugeführte Kunststoffgut wird durch das rotierende Zerkleinerungs- und Mischwerkzeug zerkleinert und in Trombenumlauf gebracht, wobei durch die hiebei entstehende Schneid- und Reibungsenergie eine Erwärmung des Kunststoffgutes erfolgt. Da große, nicht zerkleinerte Teile stärker erwärmt werden als bereits zerkleinertes Gut, entsteht beim Zerkleinerungs- und Mischvorgang eine Mischung mit ausreichend guter thermischer Homogenität. Diese Mischung wird aus dem Aufnahmebehälter über den Schneckenextruder ausgetragen und hiebei plastifiziert. Die Anordnung des Schneckenextruders auf der Höhe des Zerkleinerungs- und Mischwerkzeuges ist wesentlich günstiger als eine andere bekannte Anordnung, bei welcher der Schneckenextruder im Abstand oberhalb dieses Werkzeuges angeordnet ist, wobei eine von der Aufnahmebehälterinnenwand nach innen vorstehende Leitwand das umlaufende Gut in die Eintrittsöffnung des Schneckenextruders leitet, denn letztere Anordnung bedingt eine mehrmalige Umlenkung des zerkleinerten Gutes, bevor dieses von der Schnecke erfaßt werden kann. Ferner bewirkt die in den Behälterinnenraum hineinragende Schnecke ebenso wie die Leitwand eine Störung des Trombenumlaufes, was eine inhomogene Mischung und insbesondere bei großen Gutteilchen die Gefahr einer Blockierung des umlaufenden Werkzeuges zur Folge hat.

Bei einer anderen bekannten Vorrichtung (FR—A—2 418 707) ist der Schneckenextruder tangential zum Aufnahmebehälter angeordnet. Die Eintrittsöffnung für das Gut liegt etwa in der Mitte der länge des Schneckengehäuses, was den Nachteil hat, daß die Einbringung des Gutes in den Schneckenextruder nicht durch die auf die Gutteilchen wirkenden Fliehkräfte unterstützt wird, da die Gutteilchen annähernd normal umgelenkt werden müssen. Außerdem hat diese Anordnung erhebliche tote Ecken, in denen sich das Gut sammeln und den Umlauf des Werkzeuges blockieren kann.

Die eingangs beschriebene bekannte Anordnung, bei welcher die Schneckenachse radial in Bezug auf den Aufnahmebehälter angeordnet ist, ergibt für gut beschickbares Material eine zufriedenstellende Befüllung der Schnecke. In vielen Fällen jedoch ist eine erhöhte Auffüllung der Schnecke erwünscht, insbesondere dann, wenn verstreckte, sehr starke Kunststoffe behandelt werden sollen oder solche Kunststoffsorten, welche auf Grund ihrer Wärmeempfindlichkeit im Beisein von Sauerstoff nicht durch Wärmeeinwirkung vorverdichtet werden dürfen. Es wäre denkbar, eine höhere Schneckenauffüllung durch eine starke konusartige Erweiterung des Einzugsbereiches der Schnecke zu erzielen, jedoch bedeutet dies hohe Anschaffungskosten für die mit einem großen Durchmesser versehene Schnecke und eine höhere Abnützung derselben infolge der höheren Umfangsgeschwindigkeit.

Eine andere, aus der eingangs beschriebenen Konstruktion bekannte Möglichkeit besteht darin, die Einbringung des Gutes in die Eintrittsöffnung des Schneckenextruders dadurch zu unterstützen, daß die Zerkleinerungs- und Mischwerkzeuge eine sichelförmig zurückgekrümmte Form besitzen, so daß sie spachtelartig wirken und dadurch das Gut verstärkt in die Eintrittsöffnung des Schneckengehäuses gedrückt wird. Bei bestimmten Gutarten reicht jedoch auch dies nicht aus.

Die Erfindung setzt sich zur Aufgabe, den auf das zerkleinerte Gut durch das rotierende Zerkleinerungs- und Mischwerkzeug ausgeübten Stopfeffekt mit geringem Aufwand zu verbessern, ohne daß im Vergleich mit der eingangs beschriebenen bekannten Konstruktion eine erhöhte Abnützung in Kauf genommen werden muß. Die Erfindung löst diese Aufgabe dadurch, daß die gedachte Verlängerung der Achse der Schnecke an der Achse des Aufnahmebehälters vorbeiführt, dessen Innenraum jedoch durchsetzt, wobei die Achse der Schnecke relativ zur gleichgerichteten Radialen des Aufnahmebehälters entgegen der Bewegungsrichtung des an der Schnecke vorbeilaufenden Zerkleinerungs- und Mischwerkzeuges versetzt ist. Die Schnecke des Schneckenextruders liegt daher nicht genau radial in Bezug auf den Aufnahmehälter, sondern zulaufseitig (in Bezug auf das rotierende Werkzeug) versetzt. Dies bewirkt eine Verstärkung des Stopfeffektes, mit welchem das Gut vom umlaufenden Werkzeug in das Schneckenextrudergehäuse durch dessen Eintrittsöffnung hineingefördert wird. Die erwähnte Versetzung der Schneckenachse hat nämlich zur Folge, daß (im Vergleich zur eingangs geschilderten bekannten Konstruktion) eine höhere in Axialrichtung der Schnecke gemessene Komponente des Umfangskraftvektors und der daraus resultierenden Stopfkraft wirksam gemacht wird. Besonders günstige Verhältnisse ergeben sich im Rahmen der Erfindung, wenn der Schnittpunkt der Achse der Schnecke mit der Innenwand des Aufnahmebehälters gegenüber der zur Schneckenrichtung parallelen Radialen des Aufnahmebehälters um 5 bis 20°, vorzugsweise um 10 bis 15°, entgegen der Laufrichtung des Zerkleinerungs- und Mischwerkzeuges versetzt ist.

Eine weitere Steigerung des Stopfeffektes kann im Rahmen der Erfindung dadurch erreicht werden, daß die Drehachse des Zerkleinerungs- und Mischwerkzeuges exzentrisch in Bezug auf die Achse des Aufnahmebehälters angeordnet ist, und zwar gegen die Eintrittsöffnung des Schneckenextruders zu. Dadurch ergibt sich eine Steigerung der auf das zerkleinerte Gut wirkenden Kompression im Bereiche der Eintrittsöffnung des Schneckenextruders, was der Einbringung des Gutes in diese Öffnung förderlich ist. Vorzugsweise liegt hiebei erfindungsgemäß die Drehachse des Zerkleinerungs- und Mischwerkzeuges auf einer Geraden, welche den Mittelpunkt des Grundrisses des Aufnahmebehälters mit dem Mittelpunkt der Grundrißprojektion der Eintrittsöffnung des Schneckenextruders verbindet. Um eine Anpassung an verschiedene aufzubereitende Gutsorten erzielen zu können, ist im Rahmen. der Erfindung die Exzentrizität der Drehachse des Zerkleinerungs- und Mischwerkzeuges verstellbar. Hiezu kann im Rahmen der Erfindung die Drehachse des Zerkleinerungs- und Mischwerkzeuges in einer Schlitzführung des Bodens des Aufnahmebehälters verschiebbar geführt und mit einem an der Außenwand des Aufnahmebehälters angeordneten Verstellglied, z.B. einem Handrad, verbunden sein. Dadurch kann die Einstellung der lage des rotierenden Werkzeuges im Aufnahmebehälter auch bei laufendem Betrieb erfolgen.

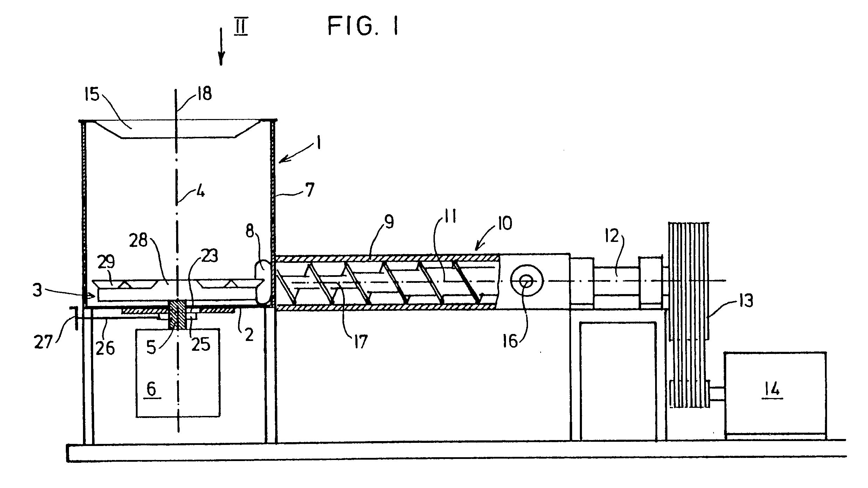

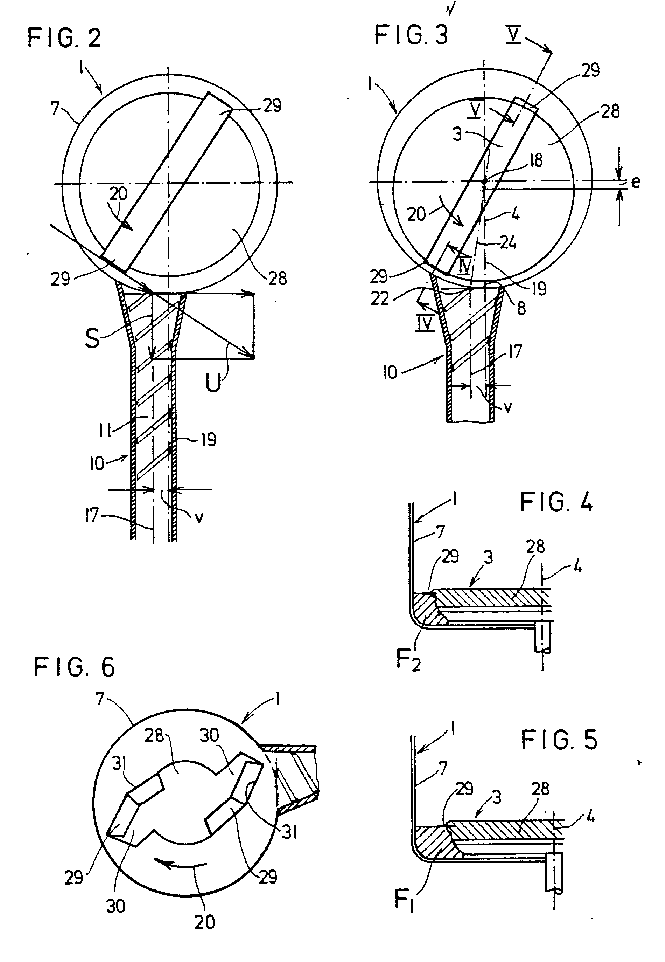

In der Zeichnung sind Ausführungsbeispiele des Erfindungsgegenstandes schematisch dargestellt. Fig. 1 zeigt einen Vertikalschnitt durch die Vorrichtung. Fig. 2 zeigt eine Draufsicht auf eine etwas abgeänderte Ausführungsform in Richtung des Pfeiles II der Fig. 1. Fig. 3 zeigt eine weitere Ausführungsform, bei welcher das umlaufende Werkzeug exzentrisch im Aufnahmebehälter gelagert ist. Die Fig. 4 und 5 zeigen Schnitte nach den linien IV—IV bzw. V—V der Fig. 3. Fig. 6 zeigt eine Ausführungsvariante zu Fig. 2.

Die Vorrichtung nach Fig. 1 zum Aufbereiten von Kunststoffgut weist einen Aufnahmebehälter 1 auf, der unten durch einen Boden 2 dicht abgeschlossen ist. Im Bereiche des Bodens ist ein Zerkleinerungs- und Mischwerkzeug 3 um eine vertikale Achse 4 drehbar angeordnet, welches über eine Welle 5 von einem Motor 6 angetrieben wird, der in einem Hohlraum unterhalb des Bodens 2 untergebracht ist. Auf der Höhe dieses Zerkleinerungs- und Mischwerkzeuges 3 ist in der Seitenwand 7 des Aufnahmebehälters 1 eine Öffnung 8 vorgesehen, an die das Gehäuse 9 eines Schneckenextruders 10 anschließt. Im Gehäuse 9 ist eine Extruderschnecke 11 drehbar gelagert, welche über eine Welle 12 und ein Keilriemengetriebe 13 von einem Motor 14 aus angetrieben wird. Das zu zerkleinernde Gut wird in den Aufnahmebehälter 1 durch einen Aufgabetrichter 15 eingebracht, vom umlaufenden Werkzeug 3 zerkleinert und gemischt und von diesem in die Öffnung 8 eingedrückt, wo das zerkleinerte Gut von der Schnecke 11 erfaßt und durch eine seitlich vom Gehäuse 9 wegführende Austrittsöffnung 16 ausgedrückt wird. Der Innendurchmesser des Gehäuses 9 des Schneckenextruders 10 kann über seine gesamte länge gleichen Durchmesser haben, er kann jedoch auch im Bereiche seines der Eintrittsöffnung 8 benachbarten Endes trichterartig erweitert sein (Fig. 2, 3), was den Einzug des Gutes erleichtert. In diesem Fall ist auch die Schnecke 11 in diesem Abschnitt konisch erweitert. Der Kerndurchmesser der Schnecke kann überall gleich sein, es ist jedoch auch möglich, wie Fig. 1 zeigt, diesen Kerndurchmesser zwischen den einzelnen Schneckengängen zu verändern, zweckmäßig in Richtung zur Austrittsöffnung 16 zu stufenförmig zu vergrößern, um den Druck auf das durch die Austrittsöffnung 16 zu extrudierende Gut zu erhöhen. Weder das Gehäuse 9 des Schneckenextruders 10 noch dessen Schnecke 11 ragen von der Innenwand des Aufnahmebehälters 1 in diesen hinein, so daß der Umlauf des Werkzeuges 3 nicht behindert und keine toten Ecken gebildet werden. Es ist zweckmäßig, das Gehäuse 9 und das Stirnende der Schnecke 11 mit der Kontur der Innenwand des Aufnahmebehälters 1 fluchtend auszubilden, jedoch ist es auch möglich, das Stirnende der Schnecke 11 relativ zu dieser Kontur etwas zurückzuversetzen.

Die Achse 17 des Schneckenextruders 10 bzw. ihre gedachte Verlängerung verläuft nicht radial zur Achse 18 des Aufnahmebehälters 1 (welche bei der in Fig. 1 dargestellten Arbeitsstellung mit der Rotationsachse 4 des Werkzeuges 3 zusammenfällt), sondern ist relativ zu dieser Radialen 19 (Fig. 2, 3) seitlich versetzt, und zwar entgegen der Bewegungsrichtung des an der Öffnung 8 vorbeilaufenden Zerkleinerungs- und Mischwerkzeuges 3, dessen Umlaufsinn durch einen Pfeil 20 angedeutet ist. Diese seitliche Versetzung ist in den Fig. 2 und 3 mit v bezeichnet. Sie hat zur Folge, daß die in Axialrichtung der Schnecke 11 wirkende Komponente S (Fig. 2) der vom rotierenden Werkzeug 3 ausgeübten Umfangskraft U größer wird im Vergleich zu einer Anordnung, bei welcher die Schneckenachse 17 (Fig. 2, 3) mit der erwähnten Radialen 19 zusammenfällt. Die Umfangskraft U wird hiebei in jenem Punkt gemessen, in welchem die Schneckenachse 17 auf den kreisförmigen Umfang des Aufnahmebehälters 1 trifft, also in der Eintrittsöffnung 8 des Schneckenextruders. Das Maß dieser Versetzung v liegt etwa zwischen 5 und 35, vorzugsweise zwischen 15 und 25% des Radius des Aufnahmebehälters 1, was einer winkelmäßigen Versetzung gegenüber der Radialen 19 von etwa 5 bis 20, vorzugsweise etwa 10 bis 15° (gemessen entgegen der Pfeilrichtung 20) entspricht.

Zur Unterstützung der Eindrückung des vom rotierenden Werkzeug 3 zerkleinerten Kunststoffgutes in den Schneckenextruder 10 ist es ferner zweckmäßig, die Achse 4, um welche dieses Werkzeug 3 umläuft, in Richtung zur Eintrittsöffnung 8 des Schneckenextruders 10 zu in Bezug auf die Achse 18 des Aufnahmebehälters 1 exzentrisch anzuordnen. Diese Exzentrizität ist in Fig. 3 mit e bezeichnet. Durch diese Exzentrizität wird erreicht (siehe Fig. 4, 5), daß jene Fläche $F_1$ (Fig. 5) bzw. $F_2$ (Fig. 4), welche zwischen der Seitenwand des Aufnahmebehälters 1 und dem Umfang des rotierenden Zerkleinerungs- und Mischwerkzeuges 3 liegt, im Bereiche der Eintrittsöffnung 8 des Schneckenextruders 10 wesentlich kleiner ist (Fläche $F_2$, Fig. 4) als an der gegenüberliegenden Seite des Aufnahmebehälters 1 (Fläche $F_1$, Fig. 5). Der Druck auf das zerkleinerte Kunststoffgut wird daher im Laufe der Umlaufbewegung des Zerkleinerungs- und Mischwerkzeuges 3, ausgehend von jener Seite des Aufnahmebehälters 1, welche der Eintrittsöffnung gegenüberliegt, immer größer, bis dieser Druck im Bereiche der Eintrittsöffnung 8 ein Maximum erreicht. Während der zweiten Hälfte der Umlaufbewegung nimmt dieser Druck wieder ab und erreicht am Ausgangspunkt, d.h. an der der Eintrittsöffnung 8 am weitesten entfernten Stelle des Aufnahmebehälters 1 ein Minimum. Das Verhältnis $F_1 : F_2$ beträgt zweckmäßig etwa 1, 3 bis 2, in Abhängigkeit von der Kompressibilität des zu verarbeitenden Kunststoffgutes. Das Maß der Exzentrizität e läßt sich auf diesen Verhältniswert bei bekanntem Profil des Zerkleinerungs- und Mischwerkzeuges 3 bzw. des Aufnahmebehälters 1 leicht errechnen.

Da nicht in allen Fällen die Art des zu verarbeitenden Gutes bzw. dessen Kompressibilität im voraus bekannt ist bzw. gleich bleibt, ist es vorteilhaft, das Maß der Exzentrizität e veränderbar bzw. einstellbar zu gestalten. Hiezu ist, wie Fig. 1 zeigt, die Welle 5 des Zerkleinerungs- und Mischwerkzeuges 3 entlang einer Geraden 24 (Fig. 3) verlagerbar, welche die Achse 18 des Aufnahmebehälters 1 mit dem Mittelpunkt 22 (Fig. 3) des Grundrisses der Eintrittsöffnung 8 verbindet. Hiezu ist diese Welle 5 in einem Längsschlitz 23 (Fig. 1) des Bodens 2 des Aufnahmebehälters 1 verschiebbar geführt, wobei die Längsachse dieses Längsschlitzes 23 auf der erwähnten, die Achse 18 mit dem Mittelpunkt 22 verbindenden Geraden 24 (Fig. 3) liegt. Zur Fixierung der Lage der Welle 5 im Längsschlitz 23 dient ein die Welle 5 umgebender Ring 25, welcher mit einer Spindel 26 verbunden ist, die mittels eines von der Außenseite der Seitenwand 7 des Behälters 1 betätigbaren Handrades 27 verdreht werden kann. Die Verdrehung der Spindel 26 bewirkt eine Verschiebung des Ringes 25 und damit der Welle 5 im Längsschlitz 23. Um zu verhindern, daß zu zerkleinerndes Gut aus dem Aufnahmebehälter 1 durch die nicht von der Welle 5 ausgefüllten Teile des Längsschlitzes 23 nach unten austritt, kann der Ring 25 entsprechend groß bemessen sein, oder es kann oberhalb des Schlitzes 23 eine genügend große, nicht dargestellte Abdeckplatte mit der Welle 5 verbunden sein, welche die verbleibenden Abschnitte des Längsschlitzes 23 abdeckt.

Bei den Ausführungsformen nach den Fig. 2 bis 5 ist das Zerkleinerungs- und Mischwerkzeug 3 von einer um die Achse 4 umlaufenden, etwa kreisförmigen Trägerscheibe 28 gebildet, auf welche Messer 29 aufgesetzt sind, die in den Fig. 4 und 5 nur angedeutet sind. Es ist jedoch noch günstiger, die Trägerscheibe 28 mit radialen Armen 30 auszubilden, welche die Messer 29 tragen. Wie Fig. 6 zeigt, sind die Arbeitskanten 31 der Messer 29 abgewinkelt ausgebildet, derart, daß die freien Enden dieser Arbeitskanten 31, in Drehrichtung des Werkzeuges 3 gesehen, zurückversetzt sind. Dadurch wird eine spachtelartige Einwirkung auf das zerkleinerte Gut erzielt, welche dazu beiträgt, dieses Gut im Bereiche der Eintrittsöffnung 8 in den Schneckenextruder 10 einzudrücken.

**Patentansprüche**

1. Vorrichtung zum Aufbereiten von Kunststoffgut, insbesondere thermoplastischem Kunststoffgut, mit einem Aufnahmebehälter (1), in dessen Bodenbereich ein um eine etwa vertikale Drehachse (4) drehbares Zerkleinerungs- und Mischwerkzeug (3) angeordnet ist, und mit einem das Gut aus dem Aufnahmebehälter (1) herausfördernden Schneckenextruder (10), dessen an einer Stirnseite der Schnecke (11) angeordnete Eintrittsöffnung (8) für das Gut von einer Öffnung in der Seitenwand (7) des Aufnahmebehälters (1) gebildet ist, die im wesentlichen auf der Höhe des Zerkleinerungs- und Mischwerkzeuges (3) angeordnet ist, wobei keine oder keine wesentlichen Teile des Schneckenextruders (10) von der Innenwand des Aufnahmebehälters (1) abstehen, dadurch gennzeichnet, daß die gedachte Verlängerung der Achse (17) des Schneckenextruders (10) an der Achse (18) des Aufnahmebehälters (1) vorbeiführt, dessen Innenraum jedoch durchsetzt, wobei die Achse (17) des Schneckenextuders (10) relativ zur gleichgerichteten Radialen (19) des Aufnahmebehälters (1) entgegen der Bewegungsrichtung des an der Schnecke (11) vorbeilaufenden Zerkleinerungs- und Mischwerkzeuges (3) versetzt ist.

2. Vorrichtung nach Anspruch 1, dadurch gekennzeichnet, daß der Schnittpunkt der Achse (17) des Schneckenextruders (10) mit der Seitenwand (7) des Aufnahmebehälters (1) gegenüber der zu der Richtung dieser Achse parallelen Radialen (19) des Aufnahmebehälters (1) um 5 bis 20°, vorzugsweise um 10 bis 15°, entgegen der Laufrichtung des Zerkleinerungs- und Mischwerkzeuges (3) versetzt ist.

3. Vorrichtung nach Anspruch 1 oder 2, dadurch gekennzeichnet, daß die Drehachse (4) des Zerkleinerungs- und Mischwerkzeuges (3) exzentrisch in Bezug auf die Achse (18) des Aufnahmebehälters (1) angeordnet ist, und zwar gegen die Eintrittsöffnung (8) des Schneckenextruders (10) zu versetzt.

4. Vorrichtung nach Anspruch 3, dadurch gekennzeichnet, daß die Drehachse (4) des Zerkleinerungs- und Mischwerkzeuges (3) auf einer Geraden (24) liegt, welche den Mittelpunkt des Grundrisses des Aufnahmebehälters (1) mit dem Mittelpunkt (22) der Grundrißprojektion der Eintrittsöffnung (8) des Schneckenextruders (10) verbindet (Fig. 3).

5. Vorrichtung nach Anspruch 3 oder 4, dadurch gekennzeichnet, daß die Exzentrizität (e) der Drehachse (4) des Zerkleinerungs- und Mischwerkzeuges (3) verstellbar ist.

6. Vorrichtung nach Anspruch 5, dadurch gekennzeichnet, daß die Drehachse des Zerkleinerungs- und Mischwerkzeuges (3) in einem längsschlitz (23) des Bodens (2) des Aufnahmebehälters (1) verschiebbar geführt und mit einem an der Außenseite der Seitenwand (7) des Aufnahmebehälters (1) angeordneten Verstellglied. z.B. einem Handrad (27), verbunden ist.

7. Vorrichtung nach Anspruch 5 oder 6, dadurch gekennzeichnet, daß das Verhältnis des größten Flächenbereiches ($F_1$, Fig. 5) zwischen dem Umfang des Zerkleinerungs- und Mischwerkzeuges (3) und der Wand des Aufnahmebehälters (1) zum kleinsten analog gemessenen Flächenbereich ($F_2$, Fig. 4) zwischen etwa 1, 3 und 2 veränderbar ist.

**Revendications**

1. Installation pour le traitement de matière synthétique, notamment de matière synthétique thermoplastique, avec avec un réservoir réceptacle (1), dans la zone de fond duquel est disposé révolutif autour d'un axe de rotation vertical (4) un outil de broyage et de mixage (3), et avec une extrudeuse à vis sans fin (10) extrayant la matière à partir et hors du réservoir réceptacle (1), dont l'orifice d'admission (8) pour la matière, à un côté frontal de la vis sans fin (11), est constitué par une ouverture dans la paroi latérale (7) du réservoir réceptacle (1), cette ouverture étant située rigoureusement au niveau de l'outil de broyage et de mixage (3), aucune partie, ou aucune partie importante de l'extrudeuse à vis sans fin (10) n'étant distante de la paroi intétérieure du réservoir réceptacle (1), l'installation étant caractérisée en ce que la prolongation spécialement étudiée de l'axe (17) de l'extrudeuse à vis sans fin (10) passe écartée contre la ligne d'axe (18) du réservoir réceptacle (1), mais traverse l'intérieur de ce réservoir, l'axe (17) de l'extrudeuse à vis sans fin (10) étant décentré par rapport à la rayonnante de même sens (19) du réservoir réceptacle (1) à l'encontre de la direction de mouvement de l'outil de broyage et de mixage (3) tournant en regard de la vis sans fin (11).

2. Installation selon la revendication 1 caractérisée en ce que le point d'intersection de l'axe (17) de l'extrudeuse à vis sans fin (10) avec la paroi latérale (7) du réservoir réceptacle (1) est décentré de 5 à 20°, de préférence de 10 à 15°, à l'encontre du sens de rotation de l'outil de broyage et de mixage (3), par rapport à la rayonnante (19) du réservoir réceptacle (1), laquelle rayonnante est parallèle à la direction de cet axe.

3. Installation selon la revendication 1 ou 2, caractérisée en ce que l'axe de rotation (4) de l'outil de broyage et de mixage (3) est disposé excentrique par rapport à l'axe (18) du réservoir réceptacle (1), et à savoir décentré vis-à-vis de l'orifice d'admission (8) de l'extrudeuse à vis sans fin (10).

4. Installation selon la revendication 3, caractérisée en ce que l'axe de rotation (4) de l'outil de broyage et de mixage (3) est situé sur une droite (24) qui relie le point médian du plan du réservoir réceptacle (1) avec le point médian (22) de la projection horizontale de l'orifice d'admission (8) de l'extrudeuse à vis sans fin (10) (Fig. 3).

5. Installation selon la revendication 3 ou 4, caractérisée en ce que l'excentricité (e) de l'axe de rotation (4) de l'outil de broyage et de mixage (3) est réglable.

6. Installation selon la revendication 5, caractérisée en ce que l'axe de rotation de l'outil de broyage et de mixage (3) est guidé coulissant dans une fente oblongue (23) du fond (2) du réservoir réceptacle (1), et est relié, au côté extérieur de la paroi latérale (7) du réservoir réceptacle (1), avec un organe de modification de réglage, tel que par exemple un volant manuel (27).

7. Installation selon la revendication 5 ou 6, caractérisée en ce que le rapport de la plus grande aire de surface ($F_1$, Fig. 5) entre la périphérie de l'outil de broyage et de mixage (3) et la paroi du réservoir réceptacle (1), relativement à la plus petite aire de surface mesurée analogue ($F_2$, Fig. 4), peut être varié entre approximativement 1, 3 et 2.

**Claims**

1. A device for processing synthetic material, in particular thermoplastic synthetic material, with a receptacle (1), in the base region of which a crushing and mixing tool (3) is arranged, which can be rotated around a roughly vertical axis of rotation (4), and with a screw extruder (10) which conveys the material out of the receptacle (1) and whose intake opening (8) for the material is arranged on the front end of the screw (11) and is formed from an opening in the side wall (7) of the receptacle (1), which opening is arranged substantially on the level of the crushing and mixing tool (3), where no or no considerable parts of the screw extruder (10) project from the interior wall of the receptacle (1), characterised in that the hypothetical extension of the axis (17) of the screw extruder (10) passes by the axis (18) of the receptacle (1), but penetrates its interior, and the axis (17) of the screw extruder (10) is offset in relation to the equidirectional radial (19) of the receptacle (1), and contrary to the direction of motion of the crushing and mixing tool (3) moving past the screw (11).

2. A device according to claim 1, characterised in that the intersection of the axis (17) of the screw extruder (10) with the side wall (7) of the receptacle (1) is offset by 5 to 20%, preferably 10 to 15°, in relation to the radial, which is parallel to the direction of this axis, of the receptacle (1) and contrary to the direction of travel of the crushing and mixing tool (3).

3. A device according to claim 1 or 2, characterised in that the axis of rotation (4) of the crushing and mixing tool (3) is arranged eccentrically in relation to the axis (18) of the receptacle (1), and in fact offset towards the intake opening (8) of the screw extruder (10).

4. A device according to claim 3, characterised in that the axis of rotation (4) of the crushing and mixing tool (3) lies on a straight line (24), which links the central point of the cross-section of the receptacle (1) with the central point (22) of the projected cross-section of the intake opening (8) of the screw extruder (10) (Fig. 3).

5. A device according to claim 3 or 4, characterised in that the eccentricity (e) of the axis of rotation (4) of the crushing and mixing tool (3) is adjustable.

6. A device according to claim 5, characterised in that the axis of rotation of the crushing and mixing tool (3), can be displacably guided in a longitudinal slit (23) in the base (2) of the receptacle (1) and is connected to an adjusting component, e.g. a hand wheel (27), arranged on the outside of the side wall (7) of the receptacle (1).

7. A device according to claim 5 or 6, characterised in that the ratio of the largest surface area ($F_1$, Fig. 5) between the circumference of the crushing and mixing tool (3) and the wall of the receptacle (1) to the smallest analogously measured surface area ($F_2$, Fig. 4) can be varied between approx. 1, 3 and 2.

FIG. I

FIG. 2

FIG. 3

FIG. 4

FIG. 6

FIG. 5